# DEMANDE DE BREVET EUROPEEN

(11) **EP 0 933 474 A1**
(43) Date de publication de la demande: **04.08.1999**
(21) Numéro de dépôt: 98400206.3
(22) Date de dépôt: 30.01.1998
(51) Int. Cl.: E01C 13/08, A01G 1/00, E01C 19/52

(54) **Dispositif automatique de pose et de ramassage de bacs engazonnés et procédé utilisant ce dispositif**

(71) Demandeur: AMP, 60120 Breteuil (FR)
(72) Inventeur: Pellerin, Michel, 60480 Noyers Saint Martin, Froissy (FR); Arnoux, Guy, 60000 Beauvais (FR)
(74) Mandataire: Debay, Yves

(57) **Abrégé**

La présente invention concerne un dispositif (1) automatique de pose et de ramassage en continu ou pas à pas de bacs (100) engazonnés caractérisé en ce qu'il est constitué d'un véhicule motorisé pourvu d'un poste (16) de conduite et de commande pour un opérateur et comportant, des moyens (2) mobiles de ramassage et de pose de bacs (100) engazonnés, des moyens (5) de convoyage des bacs (100) ramassés vers des moyens automatiques (6) d'élévations et de stockages des bacs (100) et des moyens (14, 15) automatiques de guidage permettant de conserver la linéarité du déplacement du dispositif (1) automatique de pose et de ramassage, pour aligner parfaitement les bacs (100) posés en continu.

## Description

La présente invention concerne un dispositif automatique de pose et de ramassage en continu de bacs engazonnés formant une aire de jeu ou surface sportive engazonnée déplaçable, ainsi qu'un procédé de pose et de ramassage de bacs utilisant ce dispositif.

L'invention s'applique notamment à la réalisation de surfaces engazonnées constituant des terrains de football, de rugby, d'athlétisme ou de tennis par exemple.

Les pelouses classiques présentent de nombreux inconvénients. En effet, les pelouses classiques se détériorent rapidement et leur réfection interdit leur utilisation pendant une longue période. Il est connu de "réparer" les parties abîmées de la pelouse en replaquant sur celles-ci des bandes de gazon que l'on déroule sur le sol. Cependant, ces bandes de gazon sont fragiles et leur manipulation est délicate. De plus ces bandes de gazon n'ont pas une bonne tenue, elles se détachent et s'abîment très rapidement. Les stades qui abritent ces pelouses traditionnelles peuvent également être le lieu d'autres manifestations extra-sportives telles que des concerts par exemple. Dans ce cas, il faut protéger la pelouse contre des dégradations. Pour ce faire, il est connu de poser des protections telles que des planchers ou tapis sur les pelouses. La pose et le retrait de ces protections encombrantes sont longs et coûteux. Enfin, de nombreux stades sont couverts par des dômes ou toitures de protection des tribunes. Il en résulte que les pelouses de ces stades couverts peuvent souffrir d'un manque de luminosité, ce qui entraîne un dépérissement de la pelouse.

Un but de l'invention est de proposer un dispositif simple permettant une pose et un enlèvement rapide de la surface engazonnée constituée de bacs engazonnés et palliant les inconvénients de l'art antérieur relevés ci-dessus.

Ce but est atteint par le fait que le dispositif automatique de pose et de ramassage en continu ou pas à pas de bacs engazonnés est constitué d'un véhicule motorisé pourvu d'un poste de conduite et de commande pour un opérateur et comportant, des moyens mobiles de ramassage et de pose de bacs engazonnés, des moyens de convoyage des bacs ramassés vers des moyens automatiques d'élévations et de stockages des bacs et des moyens automatiques de guidage permettant de conserver la linéarité du déplacement du dispositif automatique de pose et de ramassage, pour aligner parfaitement les bacs posés en continu ou pas à pas.

Selon une autre particularité le dispositif automatique de pose et de ramassage en continu comporte des moyens mobiles de positionnement des bacs engazonnés sur la surface de pose, permettant de plaquer les bacs les uns contre les autres.

Selon une autre particularité le dispositif comporte des moyens de nettoyage de la surface de pose des bacs pour éviter des aspérités sur cette surface.

Selon une autre particularité le dispositif comporte des moyens de déchargement permettant de décharger, vers un moyen de stockage supplémentaire extérieur, les bacs stockés dans les moyens d'élévations et de stockages du dispositif de pose et de ramassage.

Selon une autre particularité les moyens mobiles de ramassage et de pose des bacs engazonnés sont constitués d'un bras ou fourche articulée à une de ses extrémités et située à l'avant du dispositif automatique de pose et de ramassage, la fourche étant pivotable par rapport au sol permettant, de soulever par leur fond les bacs engazonnés posés sur le sol lors de l'avancement en marche avant du dispositif, et de poser les bacs sur la surface de pose lors de la progression en marche arrière du dispositif automatique de pose et de ramassage.

Selon une autre particularité la fourche est pourvue de rouleaux assurant un déplacement efficace des bacs lors du ramassage et de la pose des bacs, lors du ramassage la fourche étant constamment en position pivotée vers le sol, un premier bac ramassé porté par la fourche étant poussé vers les moyens de convoyage par un second bac adjacent suivant, ramassé par l'extrémité de la fourche, le dernier bac d'une ligne de ramassage étant translaté vers l'arrière du dispositif par le pivotement de la fourche vers le haut.

Selon une autre particularité l'extrémité de la fourche est fine et le fond du bac est légèrement relevé sur les bords du bac de façon à permettre le passage de la fourche sous les bacs lors du ramassage de ces derniers.

Selon une autre particularité la fourche est pourvue de moyens de maintien saillants, destinés à coopérer avec des logements complémentaires formés sur les bacs évitant le glissement de ce dernier hors de la fourche.

Selon une autre particularité les moyens de convoyage des bacs sont situés en aval des moyens mobiles de ramassage et sont constitués de rouleaux assurant les translations des bacs depuis ou vers les moyens de ramassage vers ou depuis les moyens d'élévation et de stockage.

Selon une autre particularité les moyens automatiques d'élévations et de stockages des bacs engazonnés sont constitués d'au moins un système d'élévateurs disposé au-dessus des moyens de convoyage et assurant le stockage vertical des bacs, les moyens d'élévations et de stockage comportant un système d'abaissement des bacs stockés vers les moyens de convoyage et destiné à la pose automatique et en continu de bacs engazonnés.

Selon une autre particularité les moyens de guidage automatique comportent un dispositif à filoguidage ou/et à rayon laser qui fournit un signal aux moyens de commande du dispositif automatique de pose et de ramassage, permettant de commander l'orientation des roues de ce dernier de façon à assurer la linéarité de son déplacement.

Selon une autre particularité les moyens mobiles de positionnement des bacs engazonnés posés sont constitués d'au moins un bras mobile articulé, l'extrémité libre du ou des bras de positionnement étant pourvue d'une tête ayant sensiblement la forme d'une équerre et permettant la prise efficace d'un bac de façon à le serrer, selon deux directions perpendiculaires, contre d'autres bacs adjacents posés.

Selon une autre particularité les moyens de nettoyage de la surface de pose des bacs sont constitués de moyens de brossage et/ou d'aspiration.

Selon une autre particularité les moyens de brossage sont constitués d'au moins un rouleau brosseur.

Selon une autre particularité les moyens de déchargement sont constitués d'un système transbordeur monté latéralement sur le dispositif automatique de pose et de retrait, le système transbordeur étant translatable verticalement sous l'action des moyens de commande du dispositif automatique de pose et de ramassage et comportant des moyens de convoyage assurant la translation des bacs entre les moyens de stockage du dispositif et le transbordeur ainsi que la translation des bacs entre le transbordeur et un moyen de stockage extérieur tel qu'une étagère.

Selon une autre particularité deux dispositifs automatiques de pose et de ramassage des bacs sont utilisés, les deux dispositifs automatiques de pose débutant la pose des bacs engazonnés sensiblement par un bord au milieu de la surface de pose et continuant chacun la pose des bacs en décrivant des S respectifs chacun d'un côté du terrain, en ajoutant des lignes de bacs formant des largeurs ou des longueurs d'un terrain ou pelouse.

D'autres particularités et avantages de la présente invention apparaîtront plus clairement à la lecture de la description ci-après faite en référence aux dessins annexés dans lesquels :
- la figure 1A représente une vue schématique de côté et en coupe, du dispositif automatique de pose et de ramassage en continu de bacs selon l'invention,
- la figure 1B représente une vue schématique de dessus des moyens de ramassage de bac du dispositif de la figure 1A,
- la figure 2 représente une vue schématique de dessus du dispositif de la figure 1A,
- la figure 3 représente une vue de dessus, schématique et partielle, des moyens de positionnement des bacs engazonnés du dispositif de la figure 1A,
- la figure 4 représente une vue schématique de face et en coupe illustrant les moyens de déchargement des bacs engazonnés du dispositif de la figure 1A,
- la figure 5 représente une vue de côté du dispositif automatique de pose et de ramassage en continu des bacs selon le procédé de l'invention,

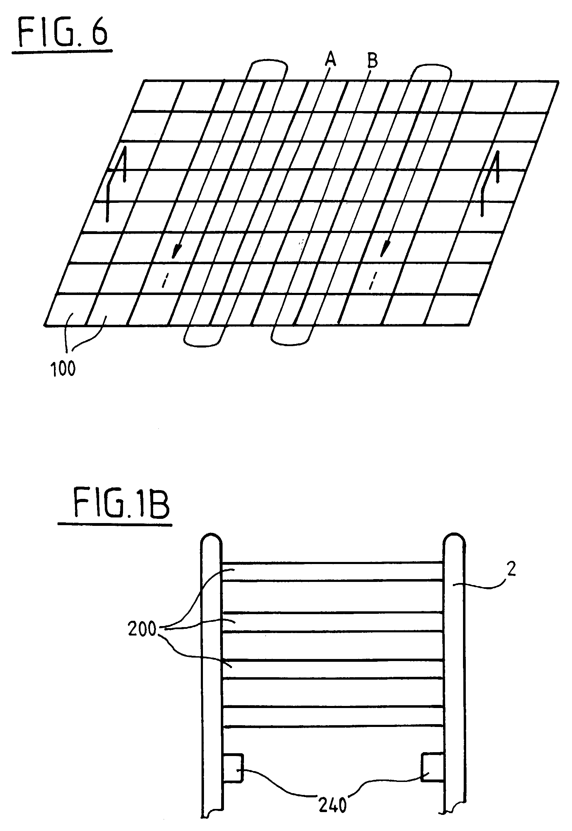

- la figure 6 représente une vue schématique d'un terrain de football réalisé selon l'invention.

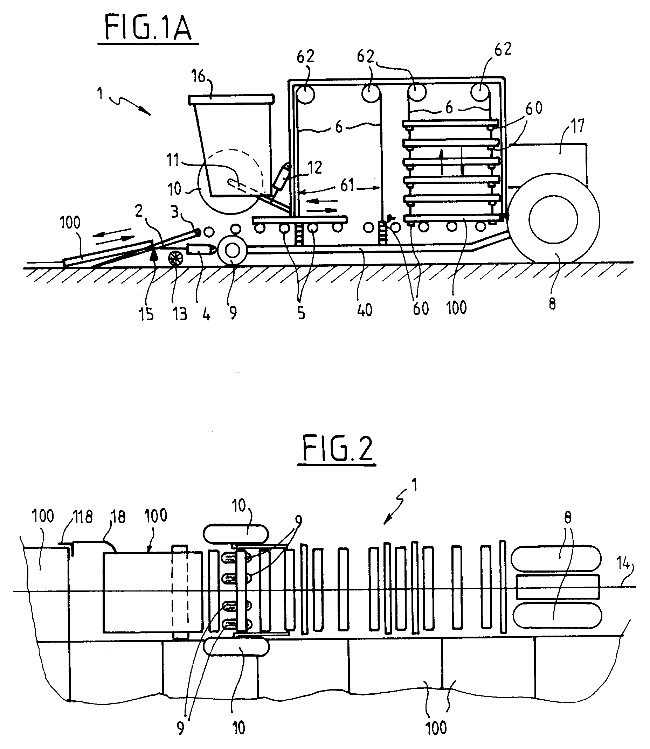

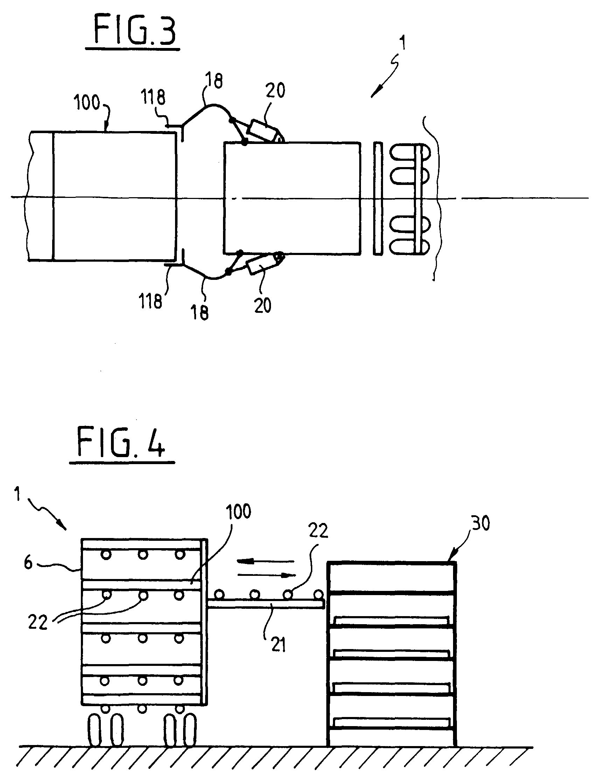

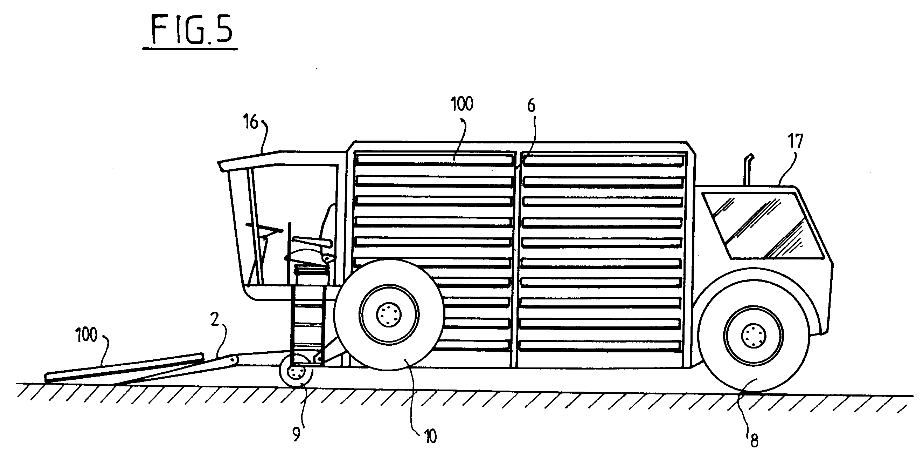

L'invention va à présent être décrite en référence aux figures 1 à 5 qui représentent le dispositif (1) automatique de pose et de ramassage en continu de bacs (100) engazonnés. De manière non limitative, les bacs (100) engazonnés sont parallélépipédiques, leur fond étant carré ou rectangulaire par exemple. Le dispositif (1) automatique de pose et de ramassage en continu des bacs (100) ou machine (1) est constitué d'un véhicule automoteur pourvu d'un poste (16) de conduite et de commande pour un opérateur. Le châssis (40) de la machine (1) porte les mécanismes décrits ci-dessous. Des moyens (2) mobiles de ramassage et de pose des bacs (100) engazonnés sont disposés à l'avant de la machine (1). Ces derniers sont constitués d'un bras ou fourche (2) articulée à son extrémité arrière, solidaire du châssis (40). Cette fourche (2) peut être pivotée autour d'un axe perpendiculaire à la ligne d'avancement de la machine (1). Le pivotement de la fourche (2) vers le haut ou vers le bas est réalisé par exemple au moyen d'un système (4) à vérins hydrauliques commandé par l'opérateur. La fourche (2) est par exemple constituée de deux bras parallèles dont les extrémités avant sont fines, telles des lames, pour permettre le passage de la fourche (2) sous le bac (100) lors du ramassage de ce dernier. A cet effet, le fond du bac (100) est légèrement relevé au niveau de ses arêtes inférieures pour permettre le passage de la fourche (2) sous le bac (100). De manière avantageuse, la fourche (2) est pourvue de rouleaux (200, figure 1B) dont les axes de symétrie sont perpendiculaires à l'axe d'avancement de la machine (1). Ces rouleaux (200) assurent la translation des bacs (100) sur la fourche (2), dans le sens du ramassage ou de la pose des bacs (100). Les rouleaux (200) de la fourche (2) peuvent être montés fous sur celle-ci. De même, il est possible de prévoir des rouleaux (200) dont la rotation est réalisée dans le sens de la pose ou du ramassage des bacs (100) par des moyens d'actionnement automatiques ou commandés par l'opérateur. Ainsi, lors de l'avancement en marche avant de la machine (1), la fourche (2) assure le ramassage des bacs (100) engazonnés posés sur le sol en les soulevant par leur fond. La fourche (2) étant constamment en position inclinée vers le sol lors de l'avancement, le premier bac (100) ramassé est poussé vers l'arrière de la machine (1) par le second bac (100) adjacent soulevé. Puis, le même processus se répète pour les bacs (100) suivants, le dernier bac (100) d'une ligne de ramassage étant translaté vers l'arrière de la machine (1) par le pivotement de la fourche (2) vers le haut. Les rouleaux (200) assurent le déplacement efficace des bacs (100) sur la fourche (2). De même, lorsque la machine (1) progresse en marche arrière, la fourche (2) permet de déposer les bacs (100) engazonnés sur le sol selon le processus inverse. De manière avantageuse, la fourche (2) peut être pourvue de moyens de maintien (240, figures 1A et 1B) saillants, destinés à coopérer avec des logements complémentaires (non représentés) formés sur le fond des bacs (100). Les moyens de maintien (240) sont par exemple situés à l'arrière de la fourche (2). Ces moyens (240) de maintien qui, par exemple, s'encliquettent avec le bac (100), évitent le glissement de celui-ci sur la fourche (2). La machine comporte un rouleau (13) brosseur rotatif disposé sous la fourche (2) ainsi que des moyens d'aspiration (non représentés), permettant le nettoyage de la surface de pose des bacs (100) pour éliminer des aspérités. Le rouleau (13) brosseur est entraîné en rotation dans le sens dans lequel les saletés sont évacuées vers l'arrière de la machine (1) ou vers les moyens d'aspiration. La machine (1) comporte également des moyens (5) de convoyage des bacs (100), situés en aval de la fourche (2). Ces moyens (5) de convoyage assurent le déplacement des bacs (100) entre la fourche (2) et des moyens automatiques (6) d'élévation et de stockages décrits ci-après. Les moyens (5) de convoyage des bacs (100) sont constitués de rouleaux (5) cylindriques rotatifs dont le sens de rotation est commandé par l'opérateur suivant l'utilisation de la machine (1). Les rouleaux (5) sont disposés régulièrement vers l'arrière de la machine (5), l'axe de symétrie des rouleaux (5) étant perpendiculaire à la direction d'avancement de la machine (1). Ainsi, suivant le sens de rotation des rouleaux (5) il est possible de convoyer les bacs (100) soit depuis la fourche (2) vers les moyens (6) d'élévation et de stockage dans le cas du ramassage des bacs (100), soit depuis les moyens (6) d'élévation et de stockage vers la fourche (2) dans le cas de la pose des bacs (100). Les moyens d'élévation automatiques (6) et de stockages des bacs (100) engazonnés sont constitués de deux systèmes d'élévation disposés au-dessus des moyens (5) de convoyage. Ces systèmes d'élévation assurent la translation et le stockage vertical des bacs (100) dans la machine (1). Ainsi, les bacs (100) ramassés sont convoyés par les rouleaux (5) jusqu'au bas des moyens d'élévations (6) et de stockages. Puis un système d'élévateurs assure le stockage vertical des bacs (100) le long de rails par exemple. Par exemple, des barres (60) de maintien, solidaires de câbles (61) verticaux, enroulés à leurs extrémités par des systèmes de treuils (62) assurent la translation et le stockage vertical des bacs (100). Les bacs (100) portés par les barres (60) de maintien sont translatés sous l'action des treuils (62) qui enroulent les câbles (61). Les moyens automatiques (6) d'élévations et de stockage permettent également, par le processus inverse, l'abaissement des bacs stockés verticalement vers les rouleaux (5) de convoyage lors de la pose des bacs sur le sol. Par ailleurs, ces moyens (6) d'élévation et de stockage peuvent être déchargés en bloc de la machine (1). C'est à dire que les piles de bacs (100) stockés verticalement peuvent être déchargés en bloc. La machine (1) est pourvue également, dans sa partie avant, de moyens de positionnement (18, figures 2, 3) mobiles des bacs (100) engazonnés sur la surface de pose. Les moyens de positionnement (18) mobiles des bacs sont destinés à plaquer les bacs (100) posés les uns contre les autres. Ces moyens (18) mobiles de positionnement des bacs (100) engazonnés posés sont constitués de deux bras (18) articulés, actionnés par des systèmes (20) à vérins hydrauliques actionnés par l'opérateur. L'extrémité libre de chaque bras (18) de positionnement est pourvue d'une tête (118) en équerre permettant une prise efficace d'un bac (100) de façon à pouvoir le serrer contre d'autres bacs adjacents posés. Cette forme avantageuse des bras (18) de positionnement permet de serrer les bacs (100) posés les uns contre les autres selon deux directions perpendiculaires. A la figure 2 un seul bras (18) de positionnement a été représenté, ce dernier pousse un bac (100) perpendiculairement à la direction d'avancement de la machine (1), de façon à le serrer contre une rangée de bacs déjà posés. A la figure 3 deux bras (18) de positionnement sont représentés, ces deux bras (18) poussent un bac (100), selon une direction parallèle à la direction d'avancement de la machine (1), de façon à le serrer contre le bac (100) adjacent précédent. Les roues arrières (8) de la machine (1) sont des roues motrices et directrices positionnées de façon à ne pas détériorer les bacs (100) en place. L'avant de la machine (1) comporte un premier jeu de roues (9) fixes ou directrices. Ces roues(9) fixes ou directrices sont de faible diamètre, c'est à dire inférieur au diamètre des roues (8) arrières. Ces roues (9) de faible diamètre sont situées sous le système de convoyage (5), légèrement en aval de la fourche (2). Les roues (9) de faible diamètre, qui peuvent être motrices ou non motrices selon les variantes de réalisation de la machine (1), sont utilisées au cours du ramassage et de la dépose des bacs (100) décrits ci-dessus. Avantageusement, l'avant de la machine (1) est pourvue d'une paire de roues (10) escamotables supplémentaires. L'essieu des roues (10) escamotables est porté par un bras (11) articulé autour d'un axe perpendiculaire à la direction d'avancement de la machine (1). Ainsi, un système (12) à vérins hydrauliques, actionné par l'opérateur, permet de commander le relèvement ou l'abaissement des roues (10) escamotables par rapport au sol. Lors du ramassage ou de la dépose des bacs (100), les roues escamotables (10) sont maintenues relevées. Lorsque l'opération de ramassage ou de dépose des bacs (100) est terminée, les roues escamotables (10) sont abaissées par l'opérateur. En abaissant les roues escamotables (10) la partie avant de la machine se trouve relevée et les roues (9) de faible diamètre sont décollées du sol. L'utilisation des roues escamotables (10) permet notamment à la machine de se déplacer plus vite, par exemple sur route. Les roues (10) escamotables peuvent être des roues motrices ou des roues non motrices. La machine (1) est pourvue en outre de moyens de déchargement permettant de décharger les bacs (100) stockés dans des moyens (6) d'élévations et de stockages vers par exemple un moyen de stockage extérieur ou un autre véhicule. Ces moyens (21) de déchargement sont constitués d'un système transbordeur (21) monté latéralement sur la machine (1). Le système (21) transbordeur est translatable verticalement sous l'action des moyens de commande actionnés par l'opérateur ou en automatique. Le transbordeur (21) est pourvu de moyens de convoyage (22) tels que des rouleaux rotatifs. Le transbordeur (21) est amené par l'opérateur ou en automatique en face du bac (100) à décharger, les moyens de convoyage (22) assurant la translation du bac vers le transbordeur (21). Puis le transbordeur (21) est translaté verticalement pour amener le bac (100) en face d'une étagère (30) ou d'un camion à charger. Les moyens de convoyage (22) assurent le déplacement du bac (100) du transbordeur vers l'étagère (30) ou un camion. Par le processus inverse il est possible de remplir la machine (1) de bacs (100) stockés sur une étagère ou dans un camion.

Avantageusement, la machine (1) est pourvue de moyens (14, 15) automatiques de guidage permettant de conserver la linéarité de son déplacement lors du ramassage et de la pose des bacs (100). Ceci permet d'aligner parfaitement les bacs (100) engazonnés posés en continu. Ces moyens (14, 15) de guidage automatique sont par exemple constitués d'un dispositif à filoguidage ou/et à rayon laser qui fournit un signal aux moyens de commande de la machine (1) permettant de commander l'orientation des roues (8, 9) de cette dernière.

La motorisation (17) de la machine est située à l'arrière de la machine. Celle-ci fournit l'énergie nécessaire à l'entraînement mécanique ou/et hydraulique ou/et électrique des différents systèmes et mécanismes de la machine (1).

Ainsi, on a un dispositif automatique (1) de pose et de ramassage pas à pas ou en continu de bacs (100) engazonnés, rapide et simple d'utilisation. A titre d'exemple nullement limitatif, deux dispositifs automatiques (1) selon l'invention peuvent être utilisés pour constituer un terrain de football tel que celui représenté à la figure 4. Avantageusement, les deux dispositifs (1) peuvent débuter la pose des bacs (100) engazonnés en deux points (A et B) respectifs situé au bord et sensiblement au milieu de la surface de pose et continuer la pose des bacs (100) en décrivant des S chacun d'un côté du terrain, ceci en ajoutant des lignes de bacs (100) qui forment des largeurs ou des longueurs de terrain comme symbolisé à la figure 4. Le ramassage des bacs peut s'effectuer selon le processus inverse ou selon ou de tout autre manière. On peut remarquer les moyens (21, 22) de déchargement de la machine autorisent plusieurs types de déchargement. En effet, l'ensemble des bacs (100) ramassés pas à pas et stockées dans les moyens (6) d'élévation et de stockage peuvent être redéposés pas à pas sur le sol selon le processus inverse au ramassage. De même, il est possible de décharger les bacs (100) ramassés dans un camion ou sur une étagère comme décrit ci dessus. Une autre variante consiste à déposer l'ensemble des élévateurs chargés de bacs (100) ramassés sur une aire de stockage ou dans un camion. De cette manière, la machine (1) permet de s'adapter à des conditions de stockage différentes qui varient en fonction de la surface de stockage disponible et de son éloignement de la surface de pose.

Il est bien évident que l'invention ne se limite pas à l'exemple de réalisation décrit ci-dessus. Par exemple, l'orientation des moyens de convoyage (5, 22) par rapport à la direction d'avancement de la machine (1) peut être différente de même que le nombre et la disposition des moyens (6) d'élévation et de stockage. Par ailleurs, les rouleaux (5) constituant les moyens de convoyages peuvent être remplacés par des systèmes à chaînes ou tapis par exemple. En outre, tous les mécanismes à actionnement hydrauliques peuvent être remplacés par d'autres moyens connus équivalents.

D'autres modifications à la portée de l'homme de métier font également partie de l'esprit de l'invention.

## Revendications

1. Dispositif (1) automatique de pose et de ramassage en continu ou pas à pas de bacs (100) engazonnés caractérisé en ce qu'il est constitué d'un véhicule motorisé pourvu d'un poste (16) de conduite et de commande pour un opérateur et comportant, des moyens (2) mobiles de ramassage et de pose de bacs (100) engazonnés, des moyens (5) de convoyage des bacs (100) ramassés vers des moyens automatiques (6) d'élévations et de stockages des bacs (100) et des moyens (14, 15) automatiques de guidage permettant de conserver la linéarité du déplacement du dispositif (1) automatique de pose et de ramassage, pour aligner parfaitement les bacs (100) posés en continu.

2. Dispositif (1) automatique de pose et de ramassage en continu de bacs (100) engazonnés selon la revendication 1 caractérisé en ce qu'il comporte des moyens mobiles (18) de positionnement des bacs (100) engazonnés sur la surface de pose, permettant de plaquer les bacs (100) les uns contre les autres.

3. Dispositif (1) automatique de pose et de ramassage en continu de bacs engazonnés selon la revendication 1 ou 2 caractérisé en ce qu'il comporte des moyens (13) de nettoyage de la surface de pose des bacs (100) pour éviter des aspérités sur cette surface.

4. Dispositif (1) automatique de pose et de ramassage en continu de bacs (100) engazonnés selon l'une des revendications 1 à 3 caractérisé en ce qu'il mporte des moyens (13) de nettoyage de la surface de pose des bacs (100) pour éviter des aspérités sur cette surface.

5. Dispositif (1) automatique de pose et de ramassage en continu de bacs (100) engazonnés selon l'une des revendications 1 à 3 caractérisé en ce qu'il comporte des moyens (21) de déchargement permettant de décharger, vers un moyen (30) de stockage supplémentaire extérieur, les bacs (100) stockés dans les moyens (6) d'élévations et de stockages du dispositif (1) de pose et de ramassage.

6. Dispositif (1) automatique de pose et de ramassage en continu de bacs engazonnés selon l'une des revendications 1 à 4 caractérisé en ce que les moyens (2) mobiles de ramassage et de pose des bacs (100) engazonnés sont constitués d'un bras ou fourche (2) articulée à une de ses extrémités (3) et située à l'avant du dispositif (1) automatique de pose et de ramassage, la fourche (2) étant pivotable par rapport au sol permettant, de soulever par leur fond les bacs (100) engazonnés posés sur le sol lors de l'avancement en marche avant du dispositif (1), et de poser les bacs (100) sur la surface de pose lors de la progression en marche arrière du dispositif (1) automatique de pose et de ramassage.

7. Dispositif (1) automatique de pose et de ramassage en continu de bacs engazonnés selon la revendications 5 caractérisé en ce que la fourche (2) est pourvue de rouleaux (200) assurant un déplacement efficace des bacs (100) lors du ramassage et de la pose des bacs (100), lors du ramassage la fourche (2) étant constamment en position pivotée vers le sol, un premier bac (100) ramassé porté par la fourche (2) étant poussé vers les moyens (5) de convoyage par un second bac (100) adjacent suivant, ramassé par l'extrémité de la fourche (2), le dernier bac d'une ligne de ramassage étant translaté vers l'arrière du dispositif (1) par le pivotement de la fourche (2) vers le haut.

8. Dispositif (1) automatique de pose et de ramassage en continu de bacs engazonnés selon la revendications 5 ou 6 caractérisé en ce que l'extrémité de la fourche (2) est fine et le fond des bac (100) est légèrement relevé sur les bords du bacs (100) de façon à permettre le passage de la fourche sous les bacs (100) lors du ramassage de ces derniers.

9. Dispositif (1) automatique de pose et de ramassage en continu de bacs engazonnés selon l'une des revendications 5 à 7 caractérisé en ce que la fourche (2) est pourvue de moyens de maintien (240) saillants, destinés à coopérer avec des logements complémentaires formés sur les bacs (100) évitant le glissement de ce dernier hors de la fourche (2).

10. Dispositif (1) automatique de pose et de ramassage en continu de bacs engazonnés selon l'une des revendications 1 à 8 caractérisé en ce que les moyens (5) de convoyage des bacs (100) sont situés en aval des moyens (2) mobiles de ramassage et sont constitués de rouleaux (5) assurant les translations des bacs (100) depuis ou vers les moyens de ramassage vers ou depuis les moyens (6) d'élévation et de stockage.

11. Dispositif (1) automatique de pose et de ramassage en continu de bacs engazonnés selon l'une des revendications 1 à 9 caractérisé en ce que les moyens automatiques (6) d'élévations et de stockages des bacs (100) engazonnés sont constitués d'au moins un système élévateur disposé au-dessus des moyens (5) de convoyage et assurant le stockage vertical des bacs (100), les moyens d'élévations (6) et de stockage comportant un système d'abaissement des bacs (100) stockés vers les moyens (5) de convoyage et destiné à la pose automatique et en continu de bacs (100) engazonnés.

12. Dispositif (1) automatique de pose et de ramassage en continu de bacs engazonnés selon l'une des revendications 1 à 10 caractérisé en ce que les moyens (14, 15) de guidage automatique comportent un dispositif à filoguidage ou/et à rayon laser qui fournit un signal aux moyens de commande du dispositif (1) automatique de pose et de ramassage, permettant de commander l'orientation des roues (8) de ce dernier de façon à assurer la linéarité de son déplacement.

13. Dispositif (1) automatique de pose et de ramassage en continu de bacs engazonnés selon l'une des revendications 2 à 11 caractérisé en ce que les moyens (18) mobiles de positionnement des bacs (100) engazonnés posés sont constitués d'au moins un bras (18) mobile articulé, l'extrémité libre du ou des bras (18) de positionnement étant pourvue d'une tête (118) ayant sensiblement la forme d'une équerre et permettant la prise efficace d'un bac (100) de façon à le serrer, selon deux directions perpendiculaires, contre d'autres bacs (100) adjacents posés.

14. Dispositif (1) automatique de pose et de ramassage en continu de bacs engazonnés selon l'une des revendications 2 à 12 caractérisé en ce que les moyens (13) de nettoyage de la surface de pose des bacs (100) sont constitués de moyens de brossage et/ou d'aspiration.

15. Dispositif (1) automatique de pose et de ramassage en continu de bacs engazonnés selon la revendication 13 caractérisé en ce que les moyens (13) de brossage sont constitués d'au moins un rouleau (13) brosseur.

16. Dispositif (1) automatique de pose et de ramassage en continu de bacs engazonnés selon l'une des revendications 4 à 14 caractérisé en ce que les moyens (21) de déchargement sont constitués d'un système transbordeur monté latéralement sur le dispositif (1) automatique de pose et de retrait, le système (21) transbordeur étant translatable verticalement sous l'action des moyens de commande du dispositif (1) automatique de pose et de ramassage et comportant des moyens (22) de convoyage assurant la translation des bacs (100) entre les moyens (6) de stockage du dispositif (1) et le transbordeur (21) ainsi que la translation des bacs (100) entre le transbordeur (21) et un moyen (30) de stockage extérieur tel qu'une étagère.

17. Procédé de pose en automatique et en continu de bacs engazonnés utilisant le dispositifs (1) automatique de pose et de ramassage selon l'une quelconque des revendications précédentes caractérisé en ce que deux dispositifs (1) automatiques de pose et de ramassage des bacs (100) sont utilisés, les deux dispositifs (1) automatiques de pose débutant la pose des bacs (100) engazonnés sensiblement par un bord, au milieu de la surface de pose, et continuant chacun la pose des bacs (100) en décrivant des S respectifs chacun d'un côté du terrain, en ajoutant des lignes de bacs (100) formant des largeurs ou des longueurs d'un terrain ou pelouse.
